# EUROPÄISCHE PATENTSCHRIFT

(11) **EP 0 533 991 B1**
(45) Veröffentlichungstag und Bekanntmachung des Hinweises auf die Patenterteilung: **15.01.1997**
(21) Anmeldenummer: 91116587.6
(22) Anmeldetag: 27.09.1991
(51) Int. Cl.: G01N 27/406

(54) **Sensor zur Bestimmung der Sauerstoffkonzentration und der Ermittlung des Anteils unverbrannter Treibstoffe im Abgas einer Brennkraftmaschine**
Sensor for determination of oxygen concentration and unburnt fuel in exhaust gases of an internal combustion engine
Détecteur pour la détermination de la concentration d'oxygène et de carburant non-brulé dans les gaz d'échappement d'un moteur à combustion

(43) Veröffentlichungstag der Anmeldung: 31.03.1993
(73) Patentinhaber: SIEMENS AKTIENGESELLSCHAFT, 80333 München (DE)
(72) Erfinder: Hanrieder, Wolfgang, Dipl.-Phys., W-8000 München 70 (DE); Meixner, Hans, Dr., W-8031 Haar (DE)

(56) Entgegenhaltungen:
- WO-A-91/14174
- DE-A- 3 728 289
- DE-A- 3 742 014
- DE-A- 3 924 644

## Beschreibung

Die vorliegende Erfindung betrifft einen Sensor zur Bestimmung der Sauerstoffkonzentration und der Ermittlung des Anteils unverbrannter Treibstoffe im Abgas einer Brennkraftmaschine, insbesondere eines Kfz-Ottomotors.

Für die zylinderselektive Regelung von Ottomotoren ist es erforderlich, den Sauerstoffanteil und den Anteil unverbrannter Treibstoffe im Abgas einzelner Zylinder zu bestimmen. Die dazu benötigten Sensoren erfordern dazu eine Ansprechzeit im Millisekundenbereich.

Einrichtungen oder Systeme dieser Art sind bisher nicht auf dem einschlägigen Markt angeboten worden.

In der betreffenden Fachliteratur sind verschiedene Sensorprinzipien beschrieben, mittels derer der Sauerstoffanteil von Abgasen zu bestimmen ist und die in Planartechnologie realisiert werden können.

Derartigen Sensoren liegen verschiedene, für den genannten Anwendungsbereich zu langsam arbeitende Meßprinzipien unter Verwendung halbleitender Metalloxide oder ZrO₂-Festkörperelektolyte nach dem Nernst'schen Prinzp zugrunde, oder sie weisen einen Aufbau und eine Betriebsweise mit ZrO₂-Grenzstromsonden nach dem Faraday'schen Gesetz auf.

Aus dem Stand der Technik DE-OS 39 24 644 A1 ist eine Meßvorrichtung zur Ermittlung des Sauerstoffüberschusses und/oder überschüssigen Brennstoff im Abgas bekannt. Die Meßvorrichtung wird durch eine erste Meßzelle gebildet, mit deren Hilfe dem Abgas Sauerstoff zudotiert werden kann. Dieser ersten Meßzelle ist eine zweite Meßzelle nachgeschaltet. Mit ihrer Hilfe kann der gesamte, freie, im Abgas nach katalytischer Nachverbrennung enthaltene Sauerstoff ermittelt werden.

Aus dem Stand der Technik DE-OS 37 42 014 A1 ist ein Verfahren zur gleichzeitigen Bestimmung des Gehalts an oxidierbaren Gasbestandteilen und des Gehalts an Sauerstoff in Gasen mit einem Festelektrolyt-Sensor bekannt. Das Verfahren basiert auf der Überlegung, daß oxidierbare Gase bei der Verbrennung den Sauerstoffanteil im Meßgas verringern. Bei dem Verfahren wird ein Pumpstrom zur Herstellung eines minimalen oder maximalen Sauerstoff-Partialdruckes an einem ersten Elektrodenpaar einer ersten Meßzelle bei gleichzeitiger Messung der Potentialdifferenz an einem zweiten Elektrodenpaar einer zweiten Meßzelle eingestellt. Aus den gemessenen Werten für die EMK und dem Pumpstrom wird der Gehalt an Sauerstoff und oxidierbaren Gasen in einem Meßgas durch Vergleich mit Meßkurven bekannter Gaszusammensetzung ermittelt.

Der vorliegenden Erfindung liegt die Aufgabe zugrunde, einen Sensor der eingangs genannten Art zu schaffen, der einen einfachen und damit kostengünstigen Aufbau hat und eine für den genannten Anwendungsbereich ausreichend kleine Reaktionszeit aufweist.

Zur Lösung der Aufgabe wird ein Sensor der eingangs genannten Art und gemäß dem Oberbegriff des Patentanspruchs 1 vorgeschlagen, der durch die in dem Patentanspruch 1 angegebenen Merkmale gekennzeichnet ist.

Vorteilhafte Weiterbildungen der Erfindung sind durch die in den Unteransprüchen angegebenen Merkmale gekennzeichnet.

Bei der vorliegenden Erfindung handelt es sich im wesentlichen um eine geeignete Kombination zweier Grenzstromsonden S1 und S2, die in bestimmter Weise betrieben werden und sich voneinander durch eine bestimmte Passivierungsschicht unterscheiden.

Im folgenden wird die Erfindung im einzelnen anhand mehrerer Figuren beschrieben, wobei die Figuren bevorzugte Ausführungsbeispiele betreffen.
- Fig. 1: zeigt eine schematische perspektivische Ansicht einer erfindungsgemäßen Sensoreinheit mit mehreren Sensorelementen verschiedener Ausführungsformen.
- Fig. 2: zeigt eine schematische Schnittansicht eines erfindungsgemäßen Sensorelements.
- Fig. 3: zeigt eine schematische Draufsicht der Anordnung zweier erfindungsgemäßer Sensorelemente, von denen das eine zum Gasraum hin offen ist und das andere eine Passivierungsschicht aufweist.

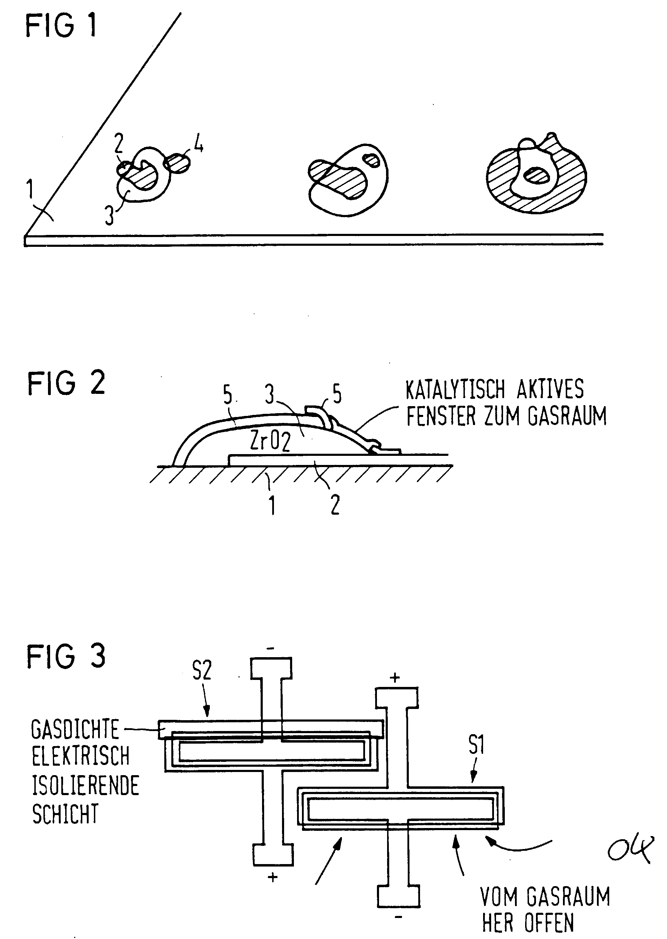

Gemäß Fig. 1 ist zur Realisierung des Sensorelements S1 auf ein ein elektrisch isolierendes Substrat 1 in Planartechnologie eine als Grund-Elektrode 2 fungierende temperaturfeste Elektrode aufgebracht. Darüber ist eine Schicht 3 stabilisierenden Zirkonoxids ZrO₂, das bei Temperaturen über ca. 400°C eine reine Sauerstoffionenleitung aufweist, so abgeschieden, daß von der Metall-Grund-Elektrode 2 alles bis auf eine ausreichend große Kontaktfläche von der ZrO₂-Schicht bedeckt ist. Eine ebenfalls temperaturfeste Deck-Elektrode 4 ist wie folgt auf die ZrO₂-Schicht abgeschieden:

Die Deck-Elektrode 4, die ZrO₂-Schicht 3 und (nichtnotwendigerweise) die Grund-Elektrode 2 haben in der Vertikalprojektion (von oben gesehen) mindestens eine gemeinsame Fläche. Die Deck-Elektrode 4 darf zur Grund-Elektrode 2 nicht elektrisch kurzgeschlossen sein, und die ZrO2-Schicht darf nicht vollständig von der Deck-Elektrode 4 bedeckt sein. Die ZrO₂-Schicht 3 ist demnach zumindest an einer Stelle direkt vom Gasraum aus zugänglich, vergl. Fig. 2.

Das Sensorelement S2 ist völlig analog aufgebaut, jedoch nichtnotwendigerweise in gleicher Geometrie. Die Deck-Elektrode ist so ausgelegt, daß sie für Gasmoleküle, insbesondere für Sauerstoffmoleküle, gut durchlässig ist und redox-katalytische Eigenschaften aufweist. Alle nicht von der Deck-Elektrode abgedeckten ZrO₂-Flächen sind mit einem elektrisch isolierenden gasdichten Material abgedeckt (z. B. Si₃N₄, SiO₂). Vorzugsweise kann sich dabei diese Isolationsschicht in ihrem Randbereich mit der Deck-Elektrode überlappen, vergl. Fig. 3.

Die beiden Sensorelemente sind vorzugsweise auf ein gemeinsames gut wärmeleitendes Substrat 1 aufgebracht, das sich - nichtnotwendigerweise durch elektrische Heizung - auf homogener Temperatur befindet. Die elektrische Heizung kann ebenfalls in Planartechnologie auf demselben Substrat in der Nähe der Sensorelemente, vorzugsweise auf der Substratunterseite, angeordnet sein.

### Funktionsweise:

Die Elektroden der Sensorelemente werden so gepolt, daß die negativen Sauerstoffionen von der Grund-Elektrode zur Deck-Elektrode durch die ZrO₂-Schicht driften, d. h. die Grund-Elektrode ist gegenüber der Deck-Elektrode negativ. Die Spannung ist so hoch gewählt, daß ein Sättigungsstrom (Grenzstrom) fließt, d. h. alle freien Sauerstoffionen, die sich in der ZrO₂-Schicht befinden, abgesaugt werden. Die Sauerstoffmoleküle gelangen vom Gasraum bei S1 direkt über die nicht abgedeckten Bereiche der ZrO₂-Schicht in die ZrO₂-Schicht und and die Grund-Elektrode. Dort entstehen Sauerstoffionen, die im angelegten Feld zur Deck-Elektrode driften. Die Sättigungsstromstärke wird durch die aus dem Gasraum nachdiffundierenden Sauerstoffmoleküle bestimmt.

Die Diffusion wiederum ist direkt vom Sauerstoffpartialdruck der Umgebung abhängig, d. h. das Sensorelement S1 mißt den Sauerstoffpartialdruck, wie er in der umgebenden Gasatmosphäre vorherrscht.

Das Sensorelement S2 funktioniert analog. Die Diffusion der Sauerstoffmoleküle erfolgt allerdings nicht direkt in das ZrO₂-Material, da dieses vollständig abgedeckt ist. Vielmehr reagiert der Sauerstoff katalytisch mit dem unverbrannten Kraftstoff an der porösen Deck-Elektrode. Der überschüssige Sauerstoffanteil diffundiert durch die poröse Deck-Elektrode und gelangt in die ZrO₂-Schicht und an die Grund-Elektrode.

Der resultierende Sättigungsionenstrom des Sensorelements S2 ist somit vom Sauerstoffpartialdruck des ausreagierten Kraftstoff/Luft-Gemisches der Umgebung abhängig.

Das Sensorelement S1 mißt also den Sauerstoffpartialdruck, wie er aktuell im Abgas vorliegt, das Sensorelement S2 mißt den Sauerstoffpartialdruck, wie er nach vollständiger Ausreaktion des Kraftstoff/Luft-Gemisches vorliegt.

Durch Differenzbildung beider Sensorsignale S1 - S2 erhält man ein Signal, das ein Maß für die Unvollständigkeit der Verbrennung im Motor ist.

Bei baugleichen Sensorelementen S1 und S2 - wobei sich S2 von S1 nur durch die gasdichte, elektrisch isolierende Abdeckschicht auf dem ZrO₂-Material unterscheidet - werden durch diese Differenzbildung auch Schwankungen in der Sauerstofftemperatur kompensiert. In diesem Fall kann auf eine Regelung der Sensortemperatur verzichtet werden.

Die Art der Sensorstrukturen in Planartechnologie eröffnet die Möglichkeit, Ansprechzeiten um 1 ms zu realisieren.

Bei Verwendung eines porösen, gasdurchlässigen Substrats wird im Sensorelement S2 der Grenzstrom durch die Nachdiffusion der Sauerstoffmoleküle aus dem Gasraum durch die poröse Substratschicht bestimmt. Die weitere Funktionsweise des Sensorelements S2 ist wie oben beschrieben, wenn die Grund-Elektrode redox-katalytische Eigenschaften besitzt, z. B. bei Verwendung einer Pt-Elektrode.

Für das Sensorelement S1 gilt auf porösem, gasdurchlässigem Substrat folgendes:

Die Verwendung einer gasdichten Schicht zwischen Substrat und Sensorelement S1 verhindert die Nachdiffusion von Sauerstoffmolekülen durch das Substrat in das Sensorelement S1. Die Funktion des Sensorelements S1 ist dann wie oben beschrieben.

Auf gasdurchlässigen Substraten kann die Polung der Sensoren auch umgekehrt werden. Dann benötigt das Sensorelement S2 jedoch eine poröse, durchdiffundierbare Schicht, die den gesamten Deck-Elektrodenbereich überdeckt.

Eine weitere mögliche Ausführungsform sieht zwei S1-artige Sensorelemente vor. Beide Sensorelemente haben ein ZrO₂-Fenster zum Gasraum. Bei einem der beiden Sensorelemente ist dieses ZrO₂-Fenster mit einem redox-katalytisch aktiven Material bedeckt. Beachtet werden muß, daß kein elektrischer Kurzschluß zwischen der Deck- und der Grund-Elektrode entsteht. Außerdem muß der verbleibende ZrO₂-Randbereich des katalytischen Flecks gasdicht und elektrisch isolierend, z. B. mittels Si₃N₄, abgedeckt werden, so daß kein direkter Zutritt vom Gasraum in das ZrO₂-Material möglich ist. Es liegen also zwei Sensorelemente vor, von denen das eine ein katalytisch aktives, das andere ein katalytisch nichtaktives Fenster vom Gasraum zum ZrO₂-Material hat.

Der erfindungsgemäße Aufbau eines Sensors, der im wesentlichen aus zwei Grenzstromsonden aus ZrO₂ in Planartechnologie besteht, gestattet es, den Sauerstoffpartialdruck, den überstöchiometrischen Sauerstoffanteil und den Anteil der unverbrannten Kraftstoffe im Abgas eines Kfz-Motors zu bestimmen.

## Patentansprüche

1. Sensor zur Bestimmung der Sauerstoffkonzentration und zur Ermittlung des Anteils unverbrannten Treibstoffs im Abgas einer Brennkraftmaschine.
- bei dem ein erstes als Grenzstromsonde fungierendes Sensorelement (S1) vorgesehen ist,
- bei dem das erste Sensorelement (S1) ein katalytisch nicht aktives Fenster aufweist, so daß mit dem ersten Sensorelement (S1) der Sauerstoffpartialdruck meßbar ist, der im Abgas herrscht,
- bei dem ein zweites als Grenzstromsonde fungierendes Sensorelement (S2) vorgesehen ist,
- bei dem das zweite Sensorelement (S2) ein katalytisch aktives Fenster aufweist und bei dem das zweite Sensorelement (S2) mit einer gasdichten elektrisch isolierenden Schicht versehen ist, die das sauerstoffionenleitende Material derart bedeckt, daß mit dem zweiten Sensorelement (S2) der Sauerstoffpartialdruck meßbar ist, der nach einer vollständigen Ausreaktion des Kraftstoff/Luftgemisches vorliegt.

2. Sensor nach Anspruch 1 oder 2, **dadurch gekennzeichnet**, daß die Sensorelemente (S1, S2) ZrO₂-Sensorelemente sind.

3. Sensor nach einem der vorhergehenden Ansprüche, **dadurch gekennzeichnet**, daß die Sensorelemente (S1, S2) auf einem gemeinsamen, elektrisch isolierenden Substrat (1) mit hoher Wärmeleitfähigkeit angeordnet sind.

4. Sensor nach einem der vorhergehenden Ansprüche, **dadurch gekennzeichnet**, daß die Sensorelemente (S1, S2) in Planartechnologie ausgeführt sind.

5. Sensor nach Anspruch 3 oder 4, **dadurch gekennzeichnet**, daß auf dem Substrat (1) in der Nähe der Sensorelemente (S1, S2) eine Heizanordnung zum Aufheizen des Substrats (1) auf eine homogene Temperatur angeordnet ist.

6. Sensor nach Anspruch 5, **dadurch gekennzeichnet**, daß die Heizanordnung auf der Substratunterseite angeordnet ist.

7. Sensor nach Anspruch 5 oder 6, **dadurch gekennzeichnet**, daß die Heizanordnung in Planartechnologie ausgeführt ist.

8. Sensor nach einem der Ansprüche 1 bis 4, **dadurch gekennzeichnet**, daß die Sensorelemente (S1, S2) jeweils aus einer Deck-Elektrode (4), einer ZrO₂-Schicht (3) und einer Grund-Elektrode (2) bestehen, wobei die Deck-Elektrode, die ZrO₂-Schicht und die Grund-Elektrode in der Vertikalprojektion mindestens eine gemeinsame Fläche haben.

9. Sensor nach Anspruch 8, **dadurch gekennzeichnet**, daß die ZrO₂-Schicht (3) eines der Sensorelemente zumindest an einer Stelle direkt vom Gasraum der Brennkraftmaschine aus zugänglich ist.

10. Sensor nach Anspruch 8, **dadurch gekennzeichnet**, daß die Deck-Elektrode (4) so beschaffen ist, daß sie für Gasmoleküle, insbesondere für Sauerstoffmoleküle, gut durchlässig ist und redox-katalytische Eigenschaften aufweist.

11. Sensor nach Anspruch 8, **dadurch gekennzeichnet**, daß alle nicht von der Deck-Elektrode (4) abgedeckten ZrO₂-Flächen mit dem elektrisch isolierenden gasdichten Material (5), z.B. Si₃N₄ oder SiO₂, abgedeckt sind.

12. Sensor nach Anspruch 8, **dadurch gekennzeichnet**, daß die Elektroden der Sensorelemente (S1, S2) so gepolt sind, daß die negativen Sauerstoffionen von der Grund-Elektrode zur Deck-Elektrode durch die ZrO₂-Schicht driften, wobei die Grund-Elektrode gegenüber der Deck-Elektrode negativ ist.

13. Verfahren zur Auswertung von durch den Sensor nach einem der vorhergehenden Ansprüche gelieferten Sensorsignalen, **dadurch gekennzeichnet**, daß eine Differenzbildung der Sensorsignale aus den zwei Sensorelementen (S1, S2) durchgeführt wird und daß die gebildete Differenz als Maß für die Unvollständigkeit der Verbrennung in der Brennkraftmaschine benutzt wird.

## Claims

1. Sensor for determining the concentration of oxygen and the proportion of unburnt fuel in the exhaust gas of an internal combustion engine,
- in which a first sensor element (S1) which functions as a limit current probe is provided,
- in which the first sensor element (S1) has a catalytically inactive window so that the partial pressure of the oxygen which prevails in the exhaust can be measured with the first sensor element (S1),
- in which a second sensor element (S2) which functions as a limit current probe is provided,
- in which the second sensor element (S2) has a catalytically active window and in which the second sensor element (S2) is provided with a gas-tight electrically insulating layer which covers the oxygen ion-conducting material such that the partial pressure of the oxygen, which obtains after the fuel/air mixture has completely reacted, can be measured with the second sensor element.

2. Sensor according to Claim 1 or 2, characterized in that the sensor elements (S1, S2) are ZrO₂ sensor elements.

3. Sensor according to one of the preceding claims, characterized in that the sensor elements (S1, S2) are arranged on a common, electrically insulating substrate (1) with a high thermal conductivity.

4. Sensor according to one of the preceding claims, characterized in that the sensor elements (S1, S2) are realized using planar technology.

5. Sensor according to Claim 3 or 4, characterized in that a heating arrangement for heating the substrate (1) to a homogeneous temperature is arranged on the substrate (1) in the vicinity of the sensor elements (S1, S2).

6. Sensor according to Claim 5, characterized in that the heating arrangement is arranged on the underside of the substrate.

7. Sensor according to Claim 5 or 6, characterized in that the heating arrangement is realized using planar technology.

8. Sensor according to one of Claims 1 to 4, characterized in that the sensor elements (S1, S2) each comprise a cover electrode (4), a ZrO₂ layer (3) and a base electrode (2), the cover electrode, the ZrO₂ layer and the base electrode having at least one common surface in the vertical projection.

9. Sensor according to Claim 8, characterized in that the ZrO₂ layer (3) of one of the sensor elements is directly accessible from the gas space of the internal combustion engine, at least at one point.

10. Sensor according to Claim 8, characterized in that the cover electrode (4) is finished in such a way that it is easily permeable to gas molecules, in particular to oxygen molecules, and has redox-catalytic properties.

11. Sensor according to Claim 8, characterized in that all the ZrO₂ surfaces not covered by the cover electrode (4) are covered with the electrically insulating, gas-tight material (5), e.g. Si₃N₄ or SiO₂.

12. Sensor according to Claim 8, characterized in that the polarity of the electrodes of the sensor elements (S1, S2) is such that the negative oxygen ions drift from the base electrode to the cover electrode through the ZrO₂ layer, the base electrode being negative with respect to the cover electrode.

13. Method for evaluating sensor signals supplied by the sensor according to one of the preceding claims, characterized in that differences are formed between the sensor signals from the two sensor elements (S1, S2), and in that the difference formed is used as a measure of the incompleteness of the combustion in the internal combustion engine.

## Revendications

1. Détecteur servant à déterminer la concentration d'oxygène et la proportion de carburant non-brûlé dans le gaz d'échappement d'un moteur à combustion interne,
- dans lequel il est prévu un premier élément (S1) de détecteur servant de sonde de courant limite,
- dans lequel le premier élément (S1) de détecteur comporte un fenêtre qui n'est pas active du point de vue catalytique, si bien que l'on peut mesurer par le premier élément (S1) de détecteur la pression partielle d'oxygène qui règne dans le gaz d'échappement,
- dans lequel il est prévu un deuxième élément (S2) de détecteur servant de sonde de courant limite,
- dans lequel le deuxième élément (S2) de détecteur comporte un fenêtre qui est active du point de vue catalytique, et dans lequel le deuxième élément (S2) de détecteur est muni d'une couche étanche au gaz, isolante de l'électricité, qui recouvre la matériau conducteur d'ions oxygène de manière que l'on puisse mesurer par le deuxième élément (S2) de détecteur la pression partielle d'oxygène, qui est présente après que le mélange carburant/air a totalement réagi.

2. Détecteur suivant la revendication 1 ou 2, caractérisé en ce que les éléments (S1, S2) de détecteur sont des éléments de détecteurs à base de ZrO₂.

3. Détecteur suivant l'une des revendications précédentes, caractérisé en ce que les éléments (S1, S2) de détecteur sont déposés sur un substrat (1) commun, isolant de l'électricité et ayant une grande capacité de conduction de la chaleur.

4. Détecteur suivant l'une des revendications précédentes, caractérisé en ce que les éléments (S1, S2) de détecteur sont réalisés en technique planar.

5. Détecteur suivant la revendication 3 ou 4, caractérisé en ce qu'il est monté sur le substrat (1), à proximité des éléments (S1, S2) de détecteur un dispositif de chauffage pour porter le substrat (1) à une température homogène.

6. Détecteur suivant la revendication 5, caractérisé en ce que le dispositif de chauffage est monté sur la face inférieure du substrat.

7. Détecteur suivant la revendication 5 ou 6, caractérisé en ce que le dispositif de chauffage est réalisé en technique planar.

8. Détecteur suivant l'une des revendications 1 à 4, caractérisé en ce que les éléments (S1, S2) de détecteur sont constitués chacun d'une électrode (4) de revêtement, d'une couche (3) de ZrO₂ et d'une électrode (2) de base, l'électrode de revêtement, la couche de ZrO₂ et l'électrode de base ayant au moins une surface commune sur la projection verticale.

9. Détecteur suivant la revendications 8, caractérisé en ce que la couche (3) de ZrO₂ d'un des éléments de détecteur est accessible au moins en un point depuis la chambre de gaz du moteur à combustion inteme.

10. Détecteur suivant la revendications 8, caractérisé en ce que l'électrode (4) de revêtement est structurée de manière à être bien perméable à des molécules de gaz, notamment à des molécules d'oxygène, et à avoir des propriétés de catalyse rédox.

11. Détecteur suivant la revendications 8, caractérisé en ce que toutes les surfaces de ZrO₂ qui ne sont pas recouvertes de l'électrode (4) de revêtement sont revêtues du matériau (5) étanche au gaz, isolant de l'électricité, par exemple Si₃N₄, SiO₂.

12. Détecteur suivant la revendications 8, caractérisé en ce que les électrodes des éléments (S1, S2) de détecteur sont polarisées de manière que les ions oxygène chargés négativement passent de l'électrode de base à l'électrode de revêtement par la couche de ZrO₂, l'électrode de base étant négative par rapport à l'électrode de revêtement.

13. Procédé d'exploitation des signaux de détecteur fournis par le détecteur suivant l'une des revendications précédentes, caractérisé en ce que l'on effectue la différence des signaux de détecteur provenant des deux éléments (S1, S2) de détecteur et en ce que l'on utilise la différence comme mesure de l'imperfection de la combustion dans le moteur à combustion interne.
